# EUROPÄISCHE PATENTSCHRIFT

(11) **EP 0 733 810 B1**
(45) Veröffentlichungstag und Bekanntmachung des Hinweises auf die Patenterteilung: **11.09.2002**
(21) Anmeldenummer: 96250067.4
(22) Anmeldetag: 22.03.1996
(51) Int. Cl.: F15B 13/08, F16K 27/00

(54) **Modulare Ventilanordnung**
Modular valve arrangement
Arrangement de soupape modulaire

(30) Priorität: 24.03.1995 DE 19512263
(43) Veröffentlichungstag der Anmeldung: 25.09.1996
(73) Patentinhaber: Rexroth Mecman GmbH, 30453 Hannover (DE)
(72) Erfinder: Möller, Rudolf, Dipl.-Ing., 30989 Gehrden (DE); Müller, Peter, 30457 Hannover (DE)
(74) Vertreter: Maiwald Patentanwalts GmbH

(56) Entgegenhaltungen:
- DE-A- 2 431 680
- DE-A- 2 852 685
- DE-A- 2 924 321
- DE-U- 9 406 393
- FR-A- 2 267 009
- GB-A- 2 064 070

## Beschreibung

Die Erfindung betrifft eine modulare Ventilanordnung gemäss dem Oberbegriff des Anspruchs 1.

Eine Ventilanordnung dieser Art ist aus der FR 2 267 009 A bekannt. Eine weitere Ventilanordnung ist aus der DE 28 52 685 A1 bekannt. Jedoch ist bei dieser bekannten Anordnung vorgesehen, die Ventile auf Grundplattenelementen anzubringen. Die Grundplattenelemente selbst sind dabei mit Fixierelementen versehen und aneinanderfügbar, so daß sich die Aneinanderfügung der einzelnen Ventile aus der Aneinanderfügung der Grundplattenelemente ergibt. Durch die Grundplattenelemente sind dabei Druckmittelleitungen angelegt, die sich bei Aneinanderfügen derselben durch die gesamte zusammengefügte Grundplattenanordnung hindurchgeschleift ergibt. Es ergibt sich damit bereits im Stand der Technik eine vorteilhafte Zusammenfassung der Druckmittelleitungen für die auf die Grundplattenelemente steckbaren Ventile. Dabei können die Venile aus einer solchen Ventilanordnung entfernt werden, ohne die gesamte Ventilbatterie oder Ventilanordnung zerlegen zu müssen. Es kommt dabei lediglich darauf an, an der Stelle, an der ein Ventil entnommen wurde, ein entsprechendes Verschlußelement anzubringen.

Sowohl bei der Herstellung, als auch bei der Montage vor Ort ist jedoch eine Vielzahl von einzelnen Bauteilen von erheblichem Nachteil.

Aus der DE 29 24 321 C2 ist ferner eine Ventilanordnung zu entnehmen, bei der die einzelnen Ventile durch Fixierelemente verbunden sind, die aus Schwalbenschwanz und Schwalbenschwanznut bestehen.

Der Erfindung liegt daher die Aufgabe zugrunde, eine Ventilanordnung dahingehend weiterzubilden, daß zum einen weniger Bauteile notwendig sind, und zum anderen die Entnahme einzelner Ventile aus einer gesamten Ventilanordnung möglich ist, ohne dieselbe insgesamt zerlegen zu müssen.

Die gestellte Aufgabe ist bei einer Ventilanordnung gemäss dem Anspruch 1 gelöst.

Weitere vorteilhafte Ausgestaltungen der Erfindungen sind in den Unteransprüchen angegeben.

Die Fixierelemente sind entgegen dem genannten Stand der Technik nicht mehr als reine Rastelemente, sondern mehr als Fügeelemente in der genannten Schwalbenschwanzausführung angegeben. Die Ausrichtung der Fügerichtung senkrecht zur sich im montierten Zustand ergebenden Druckmittelleitung ermöglicht die Entnahme eines einzelnen Ventiles aus der Gesamtventilanordnung, ohne die gesamte Anordnung zerlegen zu müssen. Ferner sind die Fixierelemente nunmehr direkt am Ventil angeordnet, so daß Grundplattenelemente entfallen können. Durch diese komplementäre Ausbildung, nämlich daß an einer der benannten Flächen des Ventiles ein Schwalbenschwanz und an der jeweils anderen Fläche jedes Ventiles eine Schwalbenschwanznut angeordnet ist, ergeben sich Fixierelemente, die zum einen eine Fügerichtung vorgeben, in der genannten erfindungsgemäßen Weise, und zum anderen auch eine Hinterschneidung aufweisen, so daß es auch zu einer axialen Haltekraft zueinander kommt. Dadurch ist es nun in weiterer Ausgestaltung vorteilhaft möglich, daß nur eine der Fügeflächen mit einer Ringdichtung versehen ist, die an der über die Schwalbenschwanzfixierelemente sich ergebende dichtringfreie Fläche im montierten Zustand, dichtend zur Anlage kommt. D. h. kurzgesagt, nur eine der Flächen muß mit einer Ringdichtung versehen sein In vorteilhafter Ausgestaltung können desweiteren zwei oder mehrere Ventile hinsichtlich der Steuerluft noch interne Verbindungen untereinander aufweisen, die durch die Ventilanordnung entweder durchgängig oder teildurchgängig angelegt sind. Hierbei kommt es zu einer zweckmäßigen Funktionszusammenfaßbarkeit mehrerer Ventile und zu der Möglichkeit zu einer übergeordneten gekoppelten Ventilfunktion zu kommen.

Die Erfindung ist in der Zeichnung dargestellt und nachfolgend näher beschrieben. Es zeigt
- Figur 1: Frontansicht auf drei zusammengesteckte Ventile.
- Figur 2: Seitenansicht eines erfindungsgemäß ausgebildeten Ventiles.

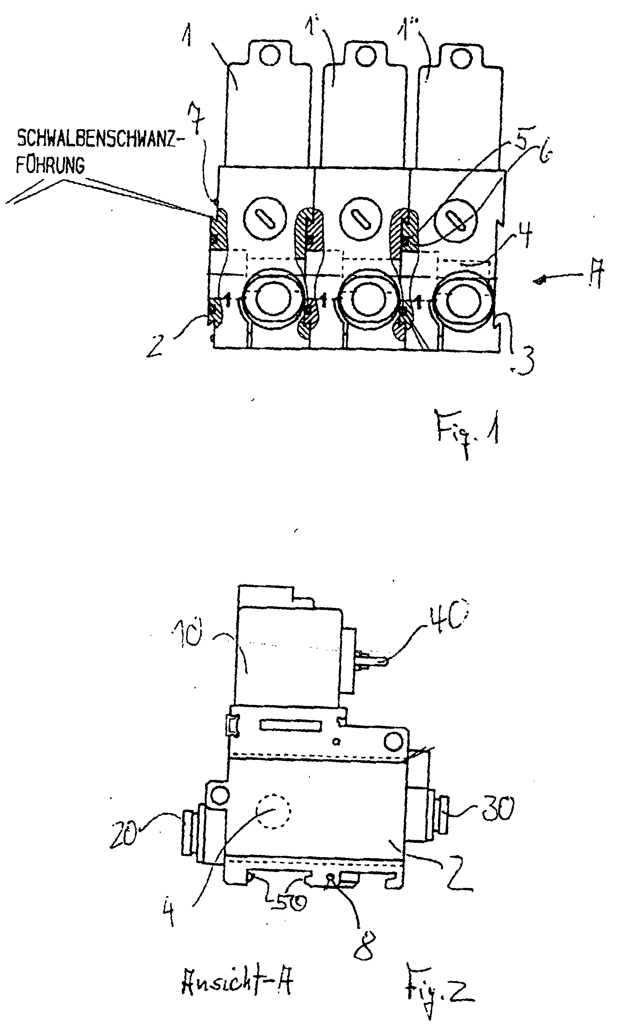

Figur 1 zeigt drei aneinander gereihte erfindungsgemäße Ventile 1, 1' und 1''. Jedes der Ventile ist an der einen Außenseite mit einer Schwalbenschwanzführung 2 und an der gegenüberliegenden anderen Außenseite mit einer Schwalbenschwanznut 3 versehen. Dadurch ist die Aneinanderreihung der Ventile möglich, weil jeweils der Schwalbenschwanz 2 eines nachfolgenden Ventiles in die Schwalbenschwanznut 3 eines vorhergehenden Venitles hineingreift. Entsprechend gestrichelt dargestellt ist die durch die Aneinanderreihung auch realisierte durchgeschleifte Druckleitung 4. Die Schwalbenschwanzführungen 2 bzw. die Schwalbenschwanznuten 3 erstrecken sich senkrecht zur dargestellten Ansicht der Figur 1. Daß heißt, aus der Ansicht der Figur 1 wären die Ventile in der Richtung senkrecht zur Papierebene zu entnehmen, wobei sich entlang dieser Richtung die Schwalbenschwanzführung 2 bzw. -nut 3 erstreckt. Somit ist gegeben, daß die Fügerichtung, in der die Ventile zusammensteckbar sind, senkrecht zur sich ergebenden Druckleitung 4 liegt. Jedes der Ventile 1, 1', 1"... ist an der Seite, an der die Schwalbenschwanzführung 2 angeordnet ist mit einer um die Öffnung des Druckleitungsabschnittes 4 ringförmig herumgelegten Nut 6 versehen, in welcher ein Dichtring 5 eingelegt ist. Die gegenüberliegende Seite jedes Ventiles, die mit der Schwalbenschwanznut 3 versehen ist, weist keinen solchen Dichtring auf. Der Dichtring an der Schwalbenschwanzseite ist jedoch so ausgelegt, daß er am Boden der Schwalbenschwanznut 3 dichtend anliegt und den Übergang von einem Ventil zum anderen abdichtet. Um die Einbaulage nach Einschieben der Ventile über die Schwalbenschwanzelemente auch zu sichern, sind Rastnoppen 7 und entsprechend Rastbohrungen 8 vorgesehen. Dabei ist ebenso wie bei der komplementären Ausbildung von jeweils eines Schwalbenschwanzes und gegenüberliegend einer Schwalbenschwanznut pro Ventil auch die Rastnoppen und Rastbohrungen in dieser komplementären Art angeordnet. So können beispielsweise an der Seite an der der Schwalbenschwanz 2 angeordnet ist, ausschließlich Rastnoppen 7 vorgesehen sein, und an der jeweils gegenüberliegenden Seite, welche mit der Schwalbenschwanznut 3 versehen ist, sind dann in entsprechender Position, zur Aufnahme der Rastnoppen nachfolgender Ventile, Rastbohrungen 8 angeordnet. Diese sind so zueinander positioniert, daß beim Einschieben der Ventile über die Schwalbenschwanzelemente bei Erreichen der Sollage die Rastnoppen 7 in die Rastbohrungen 8 fixierend eingreifen. Rastnoppen und Rastbohrungen sind jedoch so ausgebildet, daß es zu einer sicheren Fixierung der Ventile kommt, daß jedoch die Kräfte die notwendig sind, um ein einzelnes Ventil aus einer beispielsweise gesamten Batterieventil entnehmen zu können, nicht unüberwindlich sind. Vielmehr soll gewährleistet sein, daß auch ein einzelnes oder einzelne Ventile einer gesamten Ventilbatterie durchaus herausnehmbar sind, ohne die gesamte Ventilbatterie zerlegen zu müssen. Über diese sichere Führung und Fixierung der Ventile über die Schwalbenschwanzelemente und die Rastelemente, sowie die Anordnung der Dichtung, ermöglichen zum einen eine einfache Montage, und zum anderen eine sichere abdichtende Durchschleifbarkeit von Druckleitungen. Dabei kann vorgesehen sein, daß entweder nur die Druckmittelversorgungsleitung P durchgeschleift wird, oder daß zumindest teilweise bzw. bezogen auf die zusammengefügte Ventilbatterie abschnittsweise auch andere Druckleitungen mit durchschleifbar sind. Es ist auch möglich, durch durchschleif- oder koppelbare Kanäle elektrische Leitungen zu führen. Ferner kann vorgesehen sein, daß einige Ventile einer Ventilbatterie an definierter Stelle in die Ventilbatterie eingeschoben einen Abzweig von einer oder mehreren durchgeschleiften Druckmittelleitungen ventilintern bildet. Auch dies ist im Einsatz der Erfindung vorteilhaft möglich. Damit entfallen entweder alle oder zumindest ein überwiegender Teil ansonsten von außen heranzuführender oder abzuzweigender Leitungen. Durch die Koppelbarkeit unterschiedlicher Druckleitungen, und die Abzweigung derselben sowie auch durch die Möglichkeit auch Steuerluftkopplungen zwischen mindestens zwei Ventilen vornehmen zu können, entsteht mit Hilfe der Erfindung auch die Möglichkeit mehrere Ventile zu einer übergeordneten Wegeventilfunktion zu koppeln.

Figur 2 zeigt in Seitenansicht eines der erfindungsgemäß ausgebildeten Ventile. Zu sehen ist nunmehr in dieser Ansicht die Schwalbenschwanznut 3 sowie die Anordnung der Druckmittelleitung 4. Nicht dargestellt ist hierbei die Anordnung des Dichtringes die beliebig sein kann, jedoch immer so angelegt sein muß, daß die Druckmittelleitungen untereinander nach außen abgedichtet sind, sobald die Ventile miteinander gekoppelt sind. Beispielhaft ist die Lage von Rastbohrungen 8 gezeigt, zur Aufnahme der Rastnoppen 7. Die Ventile verfügen über weitere Anschlüsse 20 und 30 sowie über einen elektrischen oder elektropneumatischen Antrieb 10. Elektrische Anschlußstifte 40 dienen zur Betätigung bzw. zur Ansteuerung der Ventile.

An der Unterseite des Ventiles können Befestigungselemente 50 vorgesehen sein, mit deren Hilfe die zusammengefügte bzw. zusammengesteckte Ventilbatterie auf einem Halteelement beispielsweise einer Tragschiene befestigbar ist.

## Patentansprüche

1. Modulare Ventilanordnung, bestehend aus einzelnen Ventilen (1, 1', 1"...), welche über Fixierelemente (2, 3) aneinanderfügbar sind, wobei sich im zusammengefügten Zustand der Ventilanordnung mindestens eine durch die gesamte Ventilanordnung verlaufende Druckmittelleitung (4) ergibt, und die Fixierelemente (2, 3) direkt am Ventil (1, 1', 1" ...) angeordnet sind, und dass als Fixierelemente (2, 3) jedes Ventil (1) einen Schwalbenschwanz (2) und eine Schwalbenschwanznut (3) aufweist, welche an zueinander abgewandten Seiten des Ventils (1) angeordnet sind, derart, dass die sich ergebende Fügerichtung der Fixierelemente (2, 3) weitgehend senkrecht zur Längsachse der Druckmittelleitung (4) liegt,
**dadurch gekennzeichnet,**
**dass** jedes Ventil (1, 1', 1"...) Rastelemente (7, 8) enthält, die nach Ineinanderfügen der Schwalbenschwanzfixierelemente (2, 3) den Montagezustand sichern, und dass als Rastelemente (7, 8) an einer Fügefläche jedes Ventils Rastnoppen (7) und an der entsprechend anderen Fügefläche jedes Ventils Rastbohrungen (8) ausgebildet sind, und dass jeweils an einer der von den Fixierelementen (2, 3) versehenen Flächen abgewandten Fläche Befestigungselemente (50) versehen sind, mit deren Hilfe die montierte Ventilanordnung auf einer Befestigungsschiene anbringbar ist.

2. Modulare Ventilanordnung nach Anspruch 1,
**dadurch gekennzeichnet,**
**daß** jedes Ventil nur an einer der beiden Fügeflächen eine um den Druckmittelleitungsabschnitt (4) verlaufende Ringdichtung (5) aufweist, die an der dichtringlosen Fläche des jeweils anderen Ventiles der modularen Ventilanordnung im zusammengefügten Zustand dichtend anliegt.

3. Modulare Ventilanordnung nach einem der vorhergehenden Ansprüche,
**dadurch gekennzeichnet,**
**daß** die sich im montierten Zustand der Ventilanordnung ergebenden durchgängige Druckmittelleitung die Druckmittelversorgungsleitung P ist.

4. Modulare Ventilanordnung nach einem oder mehreren der vorhergehenden Ansprüche,
**dadurch gekennzeichnet,**
**daß** 2 oder mehrere Ventile im Bereich der Fixierelemente (2, 3) mit einer weiteren druckmittelschlüssigen Verbindung einer Steuerluftleitung versehen sind.

## Claims

1. Modular valve arrangement comprising several valves (1, 1', 1" ...) which are joinable by means of fixing elements (2, 3), wherein at least one pressure medium line (4) is formed extending through the entire valve arrangement in a joined state of the valve arrangement, and wherein the fixing elements (2, 3) are arranged directly at the valve (1, 1', 1" ...), and wherein each valve (1) has a dovetail (2) and a dovetail groove (3) as fixing elements (2, 3) which are arranged on sides of the valve (1) which are opposite to each other such that the resulting joining direction of the fixing elements (2, 3) is substantially perpendicular to a longitudinal axis of the pressure medium line (4),
**characterized in that**
each valve (1, 1', 1" ...) comprises locking elements (7, 8) which secure the assembly after the dovetail fixing elements (2, 3) are fit into each other, and the locking knobs (7) are formed as locking elements (7, 8) at a joint face of each valve, and at the respective other joint face of each valve, locking bores (8) are provided, and mounting elements (50) are provided respectively at a face opposite to faces provided with the fixing elements (2, 3), by means of which the assembled valve arrangement is attachable to a mounting bar.

2. Modular valve arrangement according to claim 1,
**characterized in that** each valve comprises an annular seal (5) extending around the pressure medium line section (4) at only one of the two joint faces, which sealingly abuts to the face without annular seal of the respective other valves of the modular valve arrangement in the assembled state.

3. Modular valve arrangement according to one of the preceding claims,
**characterized in that** the continuous pressure medium line formed in the assembled state of the valve arrangement is the pressure medium supply line P.

4. Modular valve arrangement according to one or more the preceding claims,
**characterized in that**, that two or more valves are provided with a further pressure medium coherent connection to a controlling air line in the area of the fixing elements (2, 3).

## Revendications

1. Arrangement modulaire de vannes se composant de différentes vannes (1, 1', 1"...) pouvant s'accoler les unes aux autres au moyen d'éléments de fixation (2, 3), où, en l'état accolé les unes aux autres de l'arrangement de vannes, au moins un conduit de moyen de pression (4) parcourant la totalité de l'arrangement de vannes se forme et les éléments de fixation (2, 3) sont disposés directement contre les vannes (1, 1', 1"...) et que, en tant qu'éléments de fixation (2, 3), chaque vanne (1) présente une queue d'aronde (2) et une rainure en queue d'aronde (3) disposées sur des faces qui ne sont pas orientées vers la vanne (1) de manière telle que la direction d'emboîtage des éléments de fixation (2, 3) soit largement perpendiculaire à l'axe longitudinal du conduit de moyen de pression (4),
**caractérisé en ce que**
chaque vanne (1, 1', 1"...) contient des éléments d'encliquetage (7, 8) qui, après insertion des éléments de fixation (2, 3) en queue d'aronde, assurent l'état monté et que, en tant qu'éléments d'encliquetage (7, 8) des boutons d'encliquetage (7) sont formés sur une face d'emboîtage de chaque vanne et que, sur l'autre face d'emboîtage correspondante de chaque vanne, sont formés des perçages d'encliquetage (8) et que chaque fois en une face qui n'est pas orientée vers des faces équipées d'éléments de fixation (2, 3) des éléments de fixation (50) sont pourvus permettant d'appliquer l'arrangement de vannes montée à un rail de fixation.

2. Arrangement modulaire de vannes selon la revendication 1,
**caractérisé en ce que**
chaque vanne présente un joint annulaire (5) disposé en une seule des deux faces d'emboîtage autour de la section de conduit de moyen de pression (4), placé contre la face dépourvue d'anneau d'étanchéité de l'autre vanne de l'arrangement modulaire de vannes en état assemblé en assurant l'étanchéité.

3. Arrangement modulaire de vannes selon l'une des revendications précédentes,
**caractérisé en ce que**
le conduit de moyen de pression continu résultant en état assemblé est le conduit d'alimentation P de moyen de pression.

4. Arrangement modulaire de vannes selon une ou plusieurs des revendications précédentes,
**caractérisé en ce que**
deux vannes ou plus sont pourvues dans la zone des éléments de fixation (2, 3) d'une autre d'une autre liaison en connexion avec le moyen de pression d'un conduit d'air de réglage.
